# EUROPÄISCHE PATENTANMELDUNG

(11) **EP 2 169 282 A1**
(43) Veröffentlichungstag der Anmeldung: **31.03.2010**
(21) Anmeldenummer: 09003498.4
(22) Anmeldetag: 10.03.2009
(51) Int. Cl.: F16J 15/00, F16J 15/34

(54) **Anordnung mit einer Wellendichtung**

(30) Priorität: 25.09.2008 DE 102008048942
(71) Anmelder: Siemens Aktiengesellschaft, 80333 München (DE)
(72) Erfinder: Alfes, Ludger, 46282 Dorsten (DE); Grieshaber, Dirk, 46485 Wesel (DE)

(57) **Zusammenfassung**

Die Erfindung betrifft eine Wellendichtung (SS) die mehr als ein Dichtungsmodul (SM), mindestens eine Fluidzuführung (FF) und eine Fluidableitung (FS) umfasst, mit einer Hauptdichtung (MS1) an der die größte Teildruckdifferenz (ΔPi) abfällt. Herkömmliche Wellendichtungen dieser Art benötigen regelmäßig signifikante Mengen an zusätzlichem Sperrfluid (SF), um geeignete Druckgefälle zu gewährleisten. Hier schafft die Erfindung Abhilfe, indem die erste Hauptdichtung (MS1) als eine radiale Doppeldichtung (RDS) ausgebildet ist, welche bestimmt ist, durch zwei Gasdichtungen (DGS), mit jeweils einer rotierenden Dichtfläche (RSS) und einer stehenden Dichtfläche (SSS), welches Dichtflächenpaar (SSP) sich jeweils in einer Dichtebene (SEP) gegenüber steht, wobei die beiden Dichtebenen eine im Wesentlichen zur Welle (S) radiale Erstreckung aufweisen.

## Beschreibung

Die Erfindung betrifft eine Wellendichtung zur Abdichtung eines Spaltes einer Durchführung einer Welle durch ein Gehäuse, wobei sich im Inneren des Gehäuses ein Prozessfluid unter einem Abdichtdruck und außerhalb des Gehäuses ein Umgebungsfluid unter einem Umgebungsdruck befindet, wobei die Wellendichtung mehr als ein Dichtungsmodul, mindestens eine Fluidzuführung und eine Fluidableitung umfasst, wobei sich der Umgebungsdruck von dem Abdichtdruck im Betriebszustand durch eine Druckdifferenz unterscheidet, welche Druckdifferenz zu Anteilen aufgeteilt an den einzelnen Dichtungsmodulen jeweils als Teildruckdifferenz anliegt,
wobei die Dichtungsmodule mindestens eine Hauptdichtung umfassen, welche Hauptdichtung derart ausgebildet ist, dass an dieser die größte Teildruckdifferenz anliegt,
wobei zwischen den Dichtungsmodulen mindestens eine Fluidableitung vorgesehen ist, mittels derer ein erstes Ableitungsfluid ausgeschleust wird.

Wellendichtung der vorgenannten Art finden häufigen Einsatz insbesondere an Turbomaschinen, die eine aus dem Gehäuse herausgeführte Welle aufweisen, welche den Anschluss eines An- oder Abtriebes ermöglicht. Rotierende und statische Elemente einer Dichtung bilden hierbei regelmäßig ein Dichtungsmodul. Es liegt in der Natur der Wellendichtung, dass aufgrund der Relativbewegung der Wellenoberfläche zu dem angrenzenden Gehäuse keine hundertprozentige Dichtheit erzielt werden kann. Insbesondere bei toxischen oder explosiven Prozessfluiden, die mittels der Wellendichtung von der Umgebung ferngehalten werden sollen, müssen die Leckagen sorgfältig abgeleitet werden. Auch beispielsweise bei Dampf- oder Gasturbinen wird das Prozessfluid mittels einer derartigen Wellendichtung gehindert, in die Umgebung auszutreten und die Leckage der Wellendichtung bzw. das Quantum der Absaugung hat einen direkten Einfluss auf den sich ergebenden thermischen Wirkungsgrad. Die Minimierung der Leckagen einer Wellendichtung ist eine der wichtigsten Aufgaben im Rahmen der Gestaltung derartiger Maschinen.

Bei Turboverdichtern übernehmen sog. Tandem-Gasdichtungen häufig die Aufgabe den Druckraum innerhalb des Gehäuses zur Atmosphäre hin abzudichten. Die Tandem-Gasdichtungen sind berührungslose Dichtungen und werden mit trockenem gefiltertem Sperrfluid bzw. Sperrgas geschmiert.

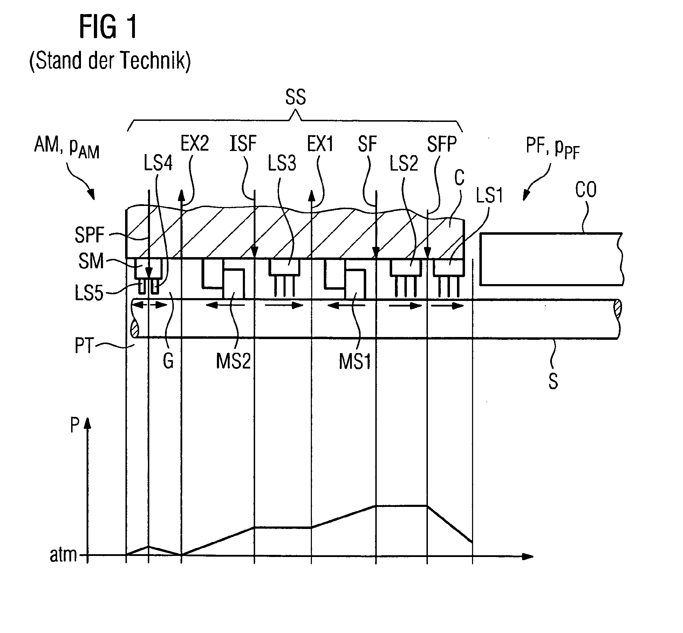

Eine herkömmliche Anordnung mit einer Wellendichtung der oben genannten Art ist in Figur 1 schematisch dargestellt. Eine Welle S erstreckt sich durch eine Durchführung PT eines Gehäuses C. Im Inneren des Gehäuses C befindet sich ein Prozessfluid PF unter einem Abdichtdruck PPF. Das Prozessfluid PF wird mittels eines Verdichters CO auf den Abdichtdruck PPF gefördert. Außerhalb des Gehäuses C befindet sich Luft AM unter einem Umgebungsdruck PAM. Ein Spalt G zwischen der Welle S und dem Gehäuse C im Bereich der Durchführung PT ist mittels einer Wellendichtung SS abgedichtet. Die Wellendichtung SS umfasst mehrere Dichtungsmodule SM, unter anderem zwei Hauptdichtungen, eine erste Hauptdichtung MS1 und eine zweite Hauptdichtung MS2. Die beiden Hauptdichtungen MS1, MS2 sind als Gasdichtungen DG1, DG2 bzw. Trockengasdichtungen DGS ausgebildet. Von dem Inneren des Gehäuses C ausgehend sind zunächst zwei Labyrinthdichtungen vorgesehen, eine erste Labyrinthdichtung LS1 und eine zweite Labyrinthdichtung LS2, zwischen denen ein Druckanhebesperrfluid SFP eingeleitet wird. Das Labyrinth LS1 und das Druckanhebesperrfluid SFP haben den Zweck den Abdichtdruck auf ein mindestens erforderliches Druckniveau zu erhöhen und sind nur erforderlich wenn der vorhandene Druck im Verdichter geringer ist als das mindestens erforderliche Druckniveau. Zwischen der ersten Hauptdichtung MS1 und der zweiten, äußeren Labyrinthdichtung LS2 wird außerdem ein Sperrfluid in den Spalt G zugeleitet. In Folge der Zuleitung des Sperrfluids SF ergibt sich durch die erste Hauptdichtung MS1 ein Massenstrom nach außen und ein Massenstrom durch das Labyrinth LS2 in Richtung Verdichter. Dieser Massenstrom ist in der Regel relativ gering und baut keinen nennenswerten Differenzdruck im Labyrinth LS2 auf. Der Massenstrom des Druckanhebesperrfluids SFP ist so bemessen, dass er zusammen mit dem Massenstrom des Sperrfluids SF der durch das Labyrinth LS2 strömt, einen Differenzdruck im Labyrinth LS1 aufstaut, der in Addition zum Druck im Verdichter dem mindestens erforderliche Druckniveau entspricht. Dieser Massenstrom strömt zurück in das Innere des Gehäuses C. Zwischen der ersten Hauptdichtung MS1 und der zweiten Hauptdichtung MS2 ist eine dritte Labyrinthdichtung LS3 vorgesehen. Zwischen der dritten Labyrinthdichtung LS3 und der zweiten Hauptdichtung MS2 wird ein Zwischensperrfluid ISF in den Spalt G eingeleitet. Während es sich bei dem Sperrfluid SF um Prozessfluid PF handelt, ist das Zwischensperrfluid ISF entweder ein Inertfluid bzw. Inertgas oder das Umgebungsmedium, meist Stickstoff.

Zwischen der ersten Hauptdichtung MS1 und der zweiten Hauptdichtung MS2 und zwar inwärtig der dritten Labyrinthdichtung LS3 wird das sich dort sammelnde Gemisch aus dem Sperrfluid SF und dem Zwischensperrfluid ISF bzw. aus dem Prozessfluid und dem Inertfluid bzw. Umgebungsfluid zu einer nachfolgenden, nicht näher dargestellten Aufbereitung abgeleitet. Die Aufbereitung kann auch eine Fackel sein, mittels derer das Gemisch abgefackelt wird. Auswärtig der zweiten Hauptdichtung MS2 befindet sich häufig noch eine zusätzliche Tandemanordnung einer Labyrinthdichtung, bestehend aus zwei Dichtungen LS4, LS5, zwischen denen ein Separationsfluid SPF eingeleitet wird. Ein Gemisch aus dem Separationsfluid SPF und dem Zwischensperrfluid ISF, welches in auswärtige Richtung durch die zweite Hauptdichtung MS2 als Leckage strömt, wird mittels einer zweiten Ableitung EX2 zu einer Aufbereitung oder ebenfalls zu einer Fackel geführt.

Unterhalb der Dichtungsanordnung zeigt Fig. 1 den Durckverlauf über die Axialrichtung, aus dem die Strömungsrichtungen durch die Dichtungen resultiert. Die Trockengasdichtungen sind hinsichtlich der Durchströmung nicht beliebig umkehrbar. Insofern muss unter bestimmten Betriebsbedingungen eine erhöhte Menge Druckanhebesperrfluid SFP zugeführt werden.

Die in der Figur 1 gezeigte Anordnung der Gasdichtung wird auch als Tandemgasdichtung bezeichnet. In der Bauart der Tandemgasdichtung, mit oder ohne Labyrinth zwischen den beiden Hauptdichtungen, wird das Zwischensperrfluid nur bei der Bauart mit Labyrinth benötigt. Bei einem Zwischensperrfluid handelt es sich normalerweise um Stickstoff aus einer externen Quelle. Sowohl Teilmengen des Sperrfluids SF zwischen der Hauptdichtung MS1 und der Zusatzwellendichtung LS2 als auch Teilmengen des Zwischensperrfluids ISF zwischen der Hauptdichtung MS2 und einer benachbarten Zusatzwellendichtung LS3 werden der ersten Ableitung EX1 zugeleitet, wobei die Drücke, wie in dem in Figur 1 unterhalb der schematischen Darstellung gezeigten Druckverlauf derart gewählt sind, dass der Großteil der zugeleiteten Fluidmenge in die erste Ableitung EX1 gelangt. Ein kleinerer Teil des Zwischensperrfluids gelangt durch die zweite Hauptdichtung MS2 in die zweite Ableitung EX2. Die Zusatzwellendichtungen LS4 und LS5 mit dem zugeleiteten Separationsfluid SPF dient im Wesentlichen der Abschirmung der zweiten Hauptdichtung MS2 von Verunreinigung der Umgebung AM, welche durch beispielsweise Ölnebel aus einem benachbarten Lager verunreinigt sein kann. Das Separationsfluid tritt zum Teil in die Umgebung AM aus und zum Teil wird es in der zweiten Ableitung EX2 abgeleitet. Für das Dichtungsmodul SM bestehend aus den Zusatzwellendichtungen LS4, LS5 können auch Kohleringe oder andere Dichtungstypen verwendet werden.

Bei niedrigen Abdichtdrücken kommt es vor, dass der Abdichtdruck mittels des zusätzlichen Druckanhebesperrfluids SFP in der ersten Zusatzwellendichtung LS1 erhöht werden muss, damit ein Druckgefälle zur ersten Ableitung EX1 vorliegt. Dies insbesondere deshalb, weil die als Gasdichtung ausgebildete erste Hauptdichtung MS1 stets ein Druckgefälle von dem abzudichtenden Raum bzw. dem Abdichtdruck in auswärtige Richtung benötigt, um mit der Rotation der Welle nicht zerstört zu werden. Je nach dem, wie hoch der Druck angehoben werden muss, sind hierzu erhebliche Mengen an Druckanhebesperrfluid SFP erforderlich. Dies wiederum verschlechtert den Wirkungsgrad der Gesamtanlage erheblich.

Die Erfindung hat es sich daher zur Aufgabe gemacht, die Anordnung mit der Wellendichtung der eingangs genannten Art derart zu verbessern, dass der Bedarf an Dichtungsfluiden abnimmt ohne dass es zu Einbußen hinsichtlich der Dichtigkeit und der Sicherheit des Betriebs kommt.

Zur Lösung der erfindungsgemäßen Aufgabe wird eine Anordnung der eingangs genannten Art mit den Merkmalen des kennzeichnenden Teils des Anspruchs 1 vorgeschlagen.

Hierbei umfassen die Dichtungsmodule mindestens eine erste Hauptdichtung, welche bevorzugt derart ausgebildet ist, dass im normalen, störungsfreien Betrieb und beim An- und Abfahren an dieser die größte Teildruckdifferenz anliegt, ausgehend vom größten Druckniveau von innen nach außen, wobei die Dichtungsmodule mindestens eine zweite Hauptdichtung umfassen die derart ausgebildet ist, dass bei Störung der ersten Hauptdichtung an dieser die größte Teildruckdifferenz anliegt, ausgehend vom größten Druckniveau von innen nach außen,
wobei zwischen den beiden Haupt-Dichtungsmodulen mindestens eine Fluidableitung vorgesehen ist, mittels derer ein erstes Ableitungsfluid ausgeschleust wird.

Wenn in der Folge die Begriffe inwärtig oder auswärtig, innen oder außen benutzt werden, bezieht sich diese Richtungsangabe auf eine zunehmende oder abnehmende Nähe zu dem Inneren des Gehäuses bzw. dem Äußeren des Gehäuses.

Durch die erfindungsgemäßen Merkmale ergeben sich besondere Vorteile. Die Sperrfluidmenge wird stark vermindert, da gegenüber den in Figur 1 dargestellten herkömmlichen Anordnung nicht mehr eine Labyrinthdichtung direkt mit dem Sperrfluid beaufschlagt wird sondern das Sperrfluid zunächst ein Dichtflächenpaar passieren muss. Hinzu kommt, dass auf eine Druckanhebung mittels des Druckanhebesperrfluids bei niedrigen Abdichtdrücken verzichtet werden kann, da die radiale Doppeldichtung ein Druckgefälle des eintretenden Sperrfluids zu beiden Seiten benötigt, bzw. erzeugt. Aufgrund des Entfallens der Druckanhebung werden die internen kreisenden Mengen an zu verdichtendem Fluid verringert und der volumetrische Wirkungsgrad beispielsweise eines Verdichters verbessert. Schließlich wird es möglich, Abdichtdrücke unterhalb des Umgebungsdrucks zu realisieren. Da die radialen Doppeldichtungen nur wenig axialen Platz benötigen und zusätzlich die Option eröffnet wird, bisher erforderliche zusätzliche Wellendichtungen vorzulassen, kann die Rotordynamik der Welle in Folge der Verkürzung verbessert werden.

Weiterhin ist es möglich das Druckniveau in der 1.
Ableitung EX1 so zu wählen, dass eine Rückführung des Fluids aus der 1. Ableitung EX1 zurück in den Verdichterprozess realisiert werden kann.

Bevorzugt ist der stehende Träger der radialen Doppeldichtung mittels eines elastischen Elements in Richtung des rotierenden Trägers vorgespannt. Auf diese Weise ist die der Fliehkraft ausgesetzte Konstruktion des Rotors weniger kompliziert ausgebildet.

Die Dichtflächenpaare sind bevorzugt koaxial angeordnet, so dass sich ein einfacher und platzsparender Aufbau ergibt.

Ein optimaler Betrieb der erfindungsgemäßen Dichtungsanordnung sieht vor, dass die erste Hauptdichtung mit Prozessfluid als Sperrfluid beaufschlagt ist.

Die zweite Hauptdichtung kann als eine einfache Trockengasdichtung ausgebildet sein. Bevorzugt ist jedoch auch für die zweite Hauptdichtung eine radiale Doppeldichtung einzusetzen, die mit einem Zwischensperrfluid als Sperrfluid beaufschlagt wird. Das Zwischensperrfluid kann hierbei je nach Art des zu verdichtenden Mediums identisch mit dem Sperrfluid der ersten Hauptdichtung oder ein anderes Fluid sein, beispielsweise Stickstoff. Entscheidend ist die Gewährleistung, dass die zweite Hauptdichtung in jedem Betriebspunkt zu beiden Seiten eine positive Druckdifferenz aufweist und sich damit ein stabiler Fluidfilm zwischen den gegenüberliegenden Dichtflächen der Dichtflächenpaare ergibt. Somit entfällt das Erfordernis, einen entsprechenden Druck in der ersten Ableitung aufzustauen, so dass zu der zweiten Hauptdichtung eine Mindestdruckdifferenz vorliegt.

Eine vorteilhafte Ausbildung der Erfindung, insbesondere wenn die zweite Hauptdichtung MS2 als einfache Trockengasdichtung ausgeführt ist, sieht vor, dass zwischen den beiden Hauptdichtungen MS1 und MS2 eine zusätzliche erste Zusatzwellendichtung LS3 bevorzugt eine Labyrinthwellendichtung angeordnet ist. Auf diese Weise wird sichergestellt, dass keine Leckagen der ersten Hauptdichtung MS1 über die zweite Hauptdichtung MS2 in die zweite Ableitung EX2 gelangen. Bei der Ausbildung mit dieser ersten Zusatzwellendichtung ist es zweckmäßig, wenn die erste Sperrfluidableitung auf der inwärtigen Seite dieser Zusatzwellendichtung zwischen den beiden Hauptdichtungen angeordnet ist.

Eine vorteilhafte Weiterbildung der Erfindung sieht vor, dass zwischen der zweiten Hauptdichtung MS2 und dieser vorgenannten Zusatzwellendichtung LS3 eine Zuführung von einem Zwischensperrfluid ISF vorgesehen ist.

Aus gleichen Gründen, wie die erste Zusatzwellendichtung zwischen den beiden Hauptdichtungen mit Vorteil angeordnet werden kann, ist es zweckmäßig, inwärtig der ersten Hauptdichtung MS1 eine zweite Zusatzwellendichtung, bevorzugt ausgebildet als Labyrinthwellendichtung vorzusehen. Wenn das Prozessfluid mit Partikeln oder sonstigem Schmutz belastet ist, ist es zweckmäßig, zwischen der ersten Hauptdichtung und der zweiten Zusatzwellendichtung eine Zuführung von einem Spülfluid vorzusehen, welches bevorzugt gereinigtes Prozessfluid ist. Dieses Spülfluid hat gegenüber dem Prozessfluid bevorzugt einen Überdruck von bevorzugt 5 bis 20 mbar.

Zur Abschottung des empfindlichen Wellendichtungssystems kann es außerdem zweckmäßig sein, wenn auswärtig der zweiten Hauptdichtung zusätzlich zwei Wellendichtungen, bevorzugt Labyrinthwellendichtungen hintereinander angeordnet sind, eine innere dritte Zusatzwellendichtung und eine äußere vierte Zusatzwellendichtung. Die Abschottung wird besonders effektiv, wenn zwischen diesen beiden Zusatzwellendichtungen eine Zuleitung eines Separationsfluids vorgesehen ist. Bei diesen Separationsfluid kann es sich um gefiltertes Umgebungsmedium handeln. Eine derartige Anordnung ist besonders interessant, wenn auswärtig der gesamten Dichtungsanordnung beispielsweise ein Öllager vorgesehen ist, aus dem austretende Ölnebel in die Dichtungsanordnungen gelangen können und zu ggf. gefährlichen Fluidmischungen führen würden.

Das zugeleitete Separationsfluid kann zweckmäßig zwischen der zweiten Hauptdichtung und den beiden hintereinander angeordneten dritten und vierten Zusatzwellendichtungen mittels einer zweiten Ableitung abgeleitet werden.

Zweckmäßig ist es, zwischen der zweiten Hauptdichtung und der vierten Zusatzwellendichtung eine zweite Ableitung vorzusehen, insbesondere können die erste Ableitung und die zweite Ableitung in eine gemeinsame Ableitung münden.

Die Ableitungen können ggf. in einer gemeinsamen Fackel einer Verbrennung zugeführt werden.

Im Folgenden ist die Erfindung anhand von Ausführungsbeispielen unter Bezugnahme auf Zeichnungen näher beschrieben. Neben den in den Ausführungsbeispielen aufgeführten Ausbildungen der Erfindung ergeben sich auch für den Fachmann aus der Beschreibung zusätzlicher Ausführungsmöglichkeiten. Es zeigen:
- Figur 1: eine schematische Darstellung einer herkömmlichen Anordnung.
- Figur 2: eine beispielhafte Darstellung einer radialen Doppeldichtung,
- Figur 3 bis 6: jeweils ein Ausführungsbeispiel einer erfindungsgemäßen Anordnung in schematischer Darstellung.

Die Pfeile unter Dichtungsmodulen SM zeigen jeweils die sich im Nennbetrieb einstellende Strömungsrichtung an.

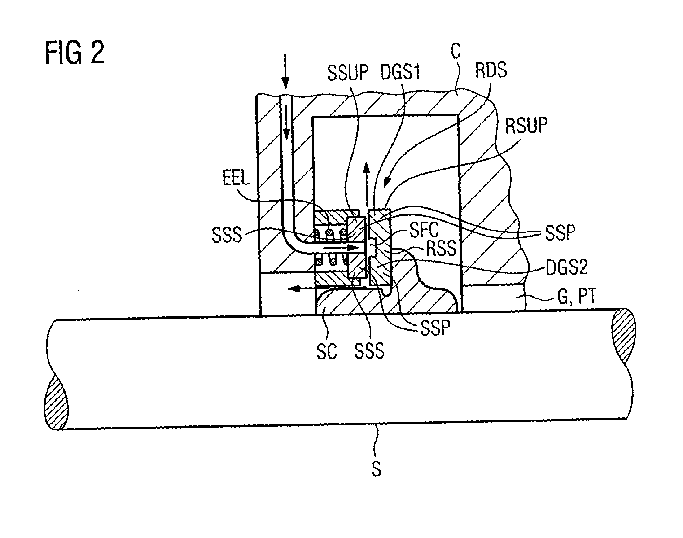

Figur 2 zeigt eine schematische Darstellung einer radialen Doppeldichtung RDS, die einen Spalt G zwischen einer Welle S und einem Gehäuse C abdichtet. Im Bereich einer Durchführung PT der Welle S durch das Gehäuse C ist die Welle S mit einem umlaufenden Absatz SC versehen, der einen rotierenden Teil der radialen Doppeldichtung RDS trägt. Die radiale Doppeldichtung besteht im Wesentlichen aus zwei radial hintereinander angeordneten Gasdichtungen DGS1, DGS2, die jeweils eine rotierende Dichtfläche RSS und eine stehende Dichtfläche SSS aufweisen, die entsprechend zwei Dichtflächenpaare SSP ergeben. Zwischen den beiden Dichtflächenpaaren SSP wird ein Sperrfluid SF in eine dort befindliche, sich in Umfangsrichtung erstreckende Kammer SFC zugeführt, welches aufgrund des Überdrucks zwischen der rotierenden Dichtfläche RSS und der stehenden Dichtfläche SSS jeweils der beiden Dichtflächenpaare SSP entweicht. Die rotierenden Dichtflächen RSS und die stehenden Dichtflächen SSS der beiden Dichtflächenpaare SSP sind fest miteinander mittels eines gemeinsamen Trägers RSUP, SSUP verbunden. Der stehende Träger SSUP ist mittels eines elastischen Elementes EEL gegen den rotierenden Träger RSUP vorgespannt.

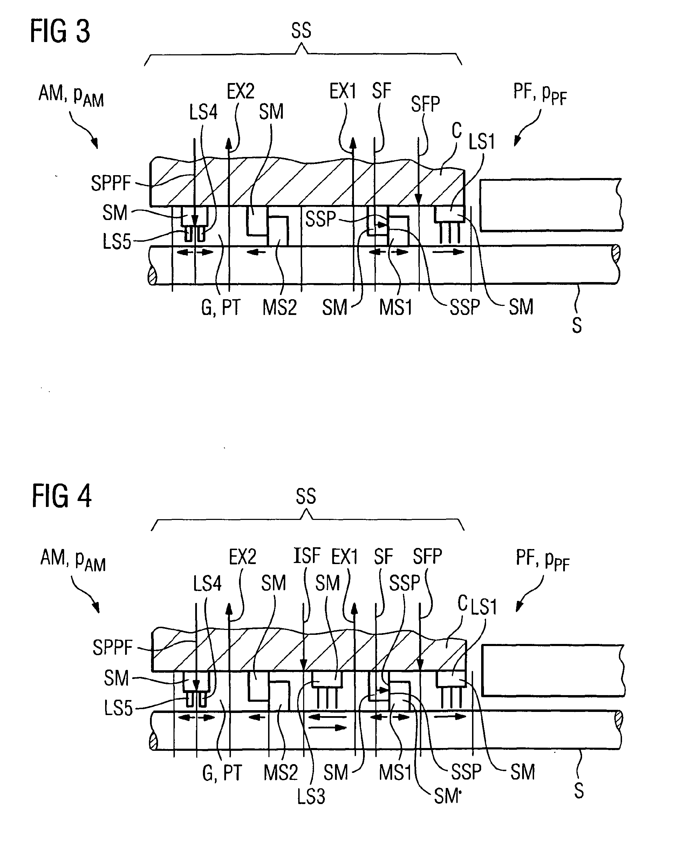

Figur 3 zeigt eine erfindungsgemäße Ausbildung einer Anordnung aus einer Welle S, einem Gehäuse C und einer Wellendichtung SS umfassend mehrere Dichtungsmodule SM. Zu den Dichtungsmodulen gehören beginnend von dem Inneren des Gehäuses C eine erste Zusatzwellendichtung LS1 ausgebildet als Labyrinthwellendichtung, eine Hauptdichtung MS1, ausgebildet als eine radiale Doppeldichtung gemäß Figur 2, eine zweite Hauptdichtung MS2, ausgebildet als eine einfache Trockengasdichtung und eine Anordnung von zwei Zusatzwellendichtungen LS4, LS5, die als Labyrinthwellendichtungen hintereinander angeordnet sind.

Der Umgebungsdruck (PAF) unterscheidet sich von dem Abdichtdruck (PPF) im Betriebszustand durch eine Druckdifferenz (ΔPtot), welche Druckdifferenz (ΔPtot) zu Anteilen aufgeteilt an den einzelnen Dichtungsmodulen (SM) jeweils als Teildruckdifferenz (ΔPi) anliegt. Die erste Hauptdichtung (MS1) ist derart ausgebildet, dass an dieser die größte Teildruckdifferenz (ΔPi) anliegt bzw. abgebaut wird.

Im Inneren des Gehäuses C herrscht Abdichtdruck PPF eines Prozessfluids PF. Zwischen der ersten Zusatzwellendichtung LS1 und der ersten Hauptdichtung MS1 wird ein Sperrspülfluid SPF zugeführt, welches gereinigtes Prozessfluid PF mit einem Überdruck gegenüber dem Abdichtdruck von 5 bis 20 mbar ist. Diese Zuführung verhindert eine Verschmutzung der gesamten Dichtungsanordnung aus einem mit Schmutz beladenen Prozessfluid PF. Soll das Prozessfluid hinreichend sauber sein, kann diese Zusatzwellendichtung LS1, LS2 entfallen. In der ersten Hauptdichtung MS1 wird Sperrfluid SF in Form von gereinigtem Prozessfluid PF mit einem Überdruck zugeführt, so dass sich eine Abströmung durch die beiden Dichtflächenpaare SSP der radialen Doppeldichtung sowohl inwärtig als auch auswärtig ergibt. Zwischen der ersten Hauptdichtung MS1 und der zweiten Hauptdichtung MS2 befindet sich eine erste Ableitung EX1, die das aus der ersten Hauptsicht MS1 nach außen strömende Prozessfluid PF ableitet. Gegenüber dem Zwischenraum zwischen der zweiten Hauptdichtung MS2 und den auswärtig folgenden Dichtungen weist der Zwischenraum zwischen der ersten Hauptdichtung MS1 und der zweiten Hauptdichtung MS2 einen Überdruck auf, der sich durch die zweite Hauptdichtung MS2, die als einfache Gasdichtung ausgebildet ist, weiter abgebaut wird. Zwischen der zweiten Hauptdichtung MS2 und den auswärtig folgenden Dichtungen befindet sich eine zweite Ableitung EX2, welche ein Gemisch aus Prozessfluid PF und Fluid, das aus der auswärtig folgenden Dichtungskombination entstammt, abführt. Außerhalb des Gehäuses befindet sich die Umgebung AM unter einem Umgebungsdruck PAM. Zwischen den beiden Zusatzwellendichtungen LS4 und LS5 am äußeren Ende der Anordnung wird eine Separationsfluid SPPF zugeleitet, das in beiden Richtungen entweicht und etwaige Verschmutzungen von außen an dem Eintritt in die Anordnung hindern soll. Bei dem Separationsfluid SPPF handelt es sich entweder um das gereinigte Medium der Umgebung oder ein inertes Fluid, beispielsweise um Stickstoff.

In der Figur 4 ist die Anordnung der Figur 3 ergänzt um eine dritte Zusatzwellendichtung LS3, die als Labyrinthdichtung ausgebildet ist, zwischen den beiden Hauptdichtungen MS1, MS2. Die erste Ableitung EX1 befindet sich inwärtig dieser zusätzlichen dritten Zusatzwellendichtung LS3. Zwischen der zusätzlichen dritten Zusatzwellendichtung LS3 und der zweiten Hauptdichtung MS2 wird ein Zwischensperrfluid ISF, beispielsweise Stickstoff eingeleitet. Hierdurch wird erreicht, dass kein Sperrfluid SF der ersten Hauptdichtung MS1 an die zweite Hauptdichtung MS2 gelangen kann und als Leckage in der Ableitung EX2 ausgeschleust werden kann.

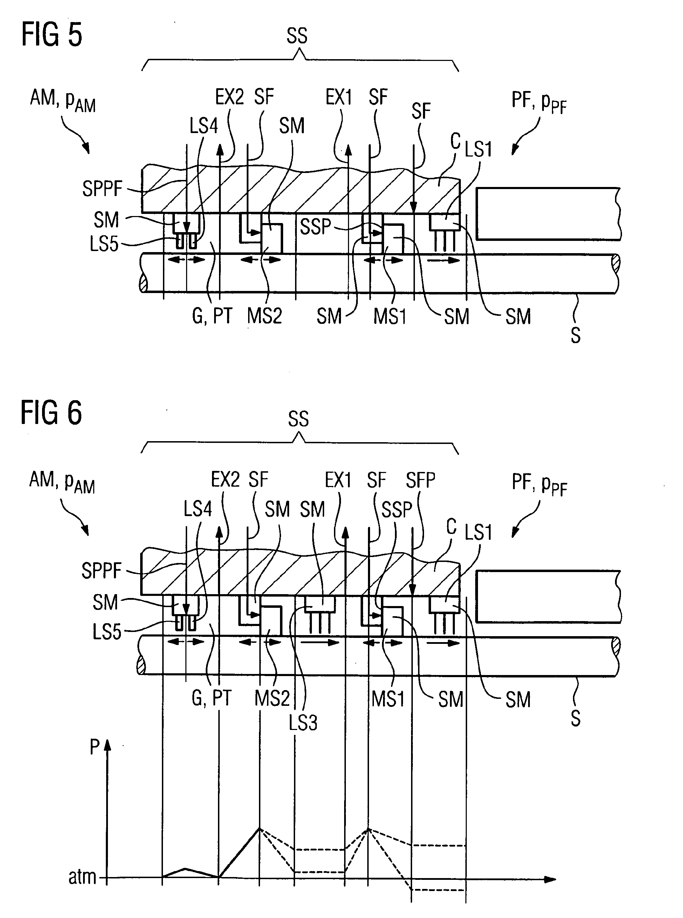

In der Figur 5 ist eine Ausbildung der Erfindung dargestellt, in der auch die zweite Hauptdichtung MS2 als radiale Doppeldichtung RDS ausgebildet ist.

Figur 6 zeigt die Anordnung der Figur 5 mit einer Ergänzung einer dritten Zusatzwellendichtung LS3 zwischen den beiden Hauptdichtungen MS1, MS2. Der in Figur 6 dargestellte Druckverlauf über die axiale Erstreckung der Dichtungsanordnung zeigt, dass der Druck P des verwendeten Sperrfluids SF über den anderen Drücken liegt und dementsprechend in einem Betriebszustand stets eine sichere Dichtwirkung gewährleistet ist. Insbesondere ist kein Druckanhebesperrfluid SFP erforderlich.

## Patentansprüche

1. Wellendichtung (SS) zur Abdichtung eines Spaltes (G) einer Durchführung (PT) einer Welle (S) durch ein Gehäuse (C), wobei sich im Inneren (IN) des Gehäuses (C) ein Prozessfluid (PF) unter einem Abdichtdruck (PPF) und außerhalb des Gehäuses (C) ein Umgebungsfluid (AF) unter einem Umgebungsdruck (PAF) befindet, wobei die Wellendichtung (SS) mehr als ein Dichtungsmodul (SM), mindestens eine Fluidzuführung (FF) und eine Fluidableitung (FS) umfasst, wobei sich der Umgebungsdruck (PAF) von dem Abdichtdruck (PPF) im Betriebszustand durch eine Druckdifferenz (ΔPtot) unterscheidet, welche Druckdifferenz (ΔPtot) zu Anteilen aufgeteilt an den einzelnen Dichtungsmodulen (SM) jeweils als Teildruckdifferenz (ΔPi) anliegt,
wobei die Dichtungsmodule (SM) mindestens eine Hauptdichtung (MS1) umfassen, welche Hauptdichtung (MS1) derart ausgebildet ist, dass an dieser die größte Teildruckdifferenz (ΔPi) anliegt,
wobei zwischen den Dichtungsmodulen (SM) mindestens eine Fluidableitung (FS1) vorgesehen ist, mittels derer ein erstes Ableitungsfluid (FLEX1) ausgeschleust wird,
**dadurch gekennzeichnet, dass**
mindestens die erste Hauptdichtung (MS1) als eine radiale Doppeldichtung (RDS) ausgebildet ist,
welche bestimmt ist, durch zwei Gasdichtungen (DGS), mit jeweils einer rotierenden Dichtfläche (RSS) und einer stehenden Dichtfläche (SSS), welches Dichtflächenpaar (SSP) sich jeweils in einer Dichtebene (SEP) gegenüber steht, wobei die beiden Dichtebenen eine im Wesentlichen zur Welle (S) radiale Erstreckung aufweisen, wobei sich ein erstes Dichtflächenpaar (SSP) der beiden Dichtflächenpaare (SSP) auf einem größeren Radius befindet als das zweite Dichtflächenpaar (SSP) und wobei die stehenden Dichtflächen (SSS) und rotierenden Dichtflächen (RSS) der beiden Dichtflächenpaare (SSP) jeweils an einem gemeinsamen Träger (RSUP, SSUP), nämlich einem stehenden Träger (SSUP) und einem rotierenden Träger (RSUP), befestigt sind, und die Dichtflächen (RSS, SSS) der Dichtflächenpaare (SSP) elastisch gegeneinander verspannt sind, indem entweder mindestens der stehende Träger (SSUP) oder der rotierende Träger (RSUP) mittels eines elastischen Elements (EEL) vorgespannt ist, wobei zwischen den beiden Dichtflächenpaaren (SSP) eine sich in Umfangsrichtung erstreckende Sperrfluidkammer (SFC) vorgesehen ist, welche mittels einer Sperrfluidzuleitung (SFS) mit Sperrfluid (SF) beaufschlagbar ist.

2. Wellendichtung (SS) nach Anspruch 1,
wobei der stehende Träger (SSUP) mittels des elastischen Elementes (EEL) vorgespannt ist.

3. Wellendichtung (SS) nach Anspruch 1 oder 2,
wobei die Dichtflächenpaare (SSP) zu der axialen Erstreckung der Welle koaxial angeordnet sind.

4. Wellendichtung (SS) nach einem der vorhergehenden Ansprüche 1 bis 3,
wobei die Hauptdichtung (MS1) mit Prozessfluid (PF) als Sperrfluid (SF) beaufschlagt ist.

5. Wellendichtung (SS) nach dem der vorhergehenden Anspruch 4,
wobei die Dichtungsmodule (SM) mindestens eine erste Hauptdichtung (MS1) und eine zweite Hauptdichtung (MS2) umfassen und zwischen den beiden Hauptdichtungen (MS1, MS2) die mindestens eine Fluidableitung (FS1) vorgesehen ist.

6. Wellendichtung (SS) nach mindestens einem der vorhergehenden Ansprüche 1 bis 4,
wobei die zweite Hauptdichtung (MS2) als eine einfache Trockengasdichtung ausgebildet ist.

7. Wellendichtung (SS) nach einem der vorhergehenden Ansprüche 1 bis 4,
wobei die zweite Hauptdichtung (MS2) als eine radiale Doppeldichtung (RDS) ausgebildet ist, die mit einem Zwischensperrfluid (ISF) als Sperrfluid (SF) beaufschlagt wird.

8. Wellendichtung (SS) nach mindestens einem der vorhergehenden Ansprüche 1 bis 7,
wobei zwischen den beiden Hauptdichtungen (MS1, MS2) eine dritte Zusatzwellendichtung (LS3) angeordnet ist.

9. Wellendichtung (SS) nach Anspruch 8,
wobei die erste Fluidableitung (EX1) auf der innenwärtigen Seite der dritten Zusatzwellendichtung (LS3) angeordnet ist.

10. Wellendichtung (SS) nach mindestens einem der vorhergehenden Ansprüche 1 bis 9,
wobei zwischen der zweiten Hauptwellendichtung (MS2) und der dritten Zusatzwellendichtung (LS3) bei Zuführung von einem Zwischensperrfluid (ISF) vorgesehen ist.

11. Wellendichtung (SS) nach mindestens einem der vorhergehenden Ansprüche 1 bis 10,
wobei innenwärtig der ersten Hauptwellendichtung (MS1) eine zweite Zusatzwellendichtung (LS1, LS2) angeordnet ist.

12. Wellendichtung (SS) nach Anspruch 11,
wobei zwischen der ersten Hauptdichtung (MS1) und der zweiten Zusatzwellendichtung (LS1) eine Zuführung von einem Spülfluid (SPF) vorgesehen ist.

13. Wellendichtung (SS) nach mindestens einem der vorhergehenden Ansprüche 1 bis 12,
wobei auswärtig der zweiten Hauptdichtung (MS2) zwei Zusatzwellendichtungen, (LS4, LS5) hintereinander angeordnet sind, eine innere vierte Zusatzwellendichtung (LS4) und eine äußere fünfte Zusatzwellendichtung (LS5).

14. Wellendichtung (SS) nach Anspruch 13,
wobei zwischen der vierten Zusatzwellendichtung (LS4) und der fünften Zusatzwellendichtung (LS5) eine Zuleitung eines Separationsfluids (SPPF) angeordnet ist.

15. Anordnung mit einer Wellendichtung (SS) nach mindestens einem der vorhergehenden Ansprüche.
